(19) **Europäisches Patentamt**
**European Patent Office**
**Office européen des brevets**

(11) **EP 4 040 390 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(51) Internationale Patentklassifikation (IPC):
***G06T 7/73*** *(2017.01)*

(21) Anmeldenummer: **22154327.5**

(22) Anmeldetag: **31.01.2022**

(52) Gemeinsame Patentklassifikation (CPC):
**G06T 7/73;** G06T 2207/10004; G06T 2207/30252

(54) **VERFAHREN ZUR BESTIMMUNG EINER ORIENTIERUNG EINES FLURFÖRDERZEUGS**

METHOD FOR DETERMINING AN ORIENTATION OF AN INDUSTRIAL TRUCK

PROCÉDÉ DE DÉTERMINATION D'UNE ORIENTATION D'UN CHARIOT DE MANUTENTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2021 DE 102021102633**

(43) Veröffentlichungstag der Anmeldung:
**10.08.2022 Patentblatt 2022/32**

(73) Patentinhaber: **Jungheinrich Aktiengesellschaft 22047 Hamburg (DE)**

(72) Erfinder:
- **Bistry, Hannes**
  **25421 Pinneberg (DE)**
- **Bruss, Benjamin**
  **22177 Hamburg (DE)**

(74) Vertreter: **Hauck Patentanwaltspartnerschaft mbB**
**Postfach 11 31 53**
**20431 Hamburg (DE)**

(56) Entgegenhaltungen:
**EP-A2- 3 151 199       US-A1- 2019 096 080
US-A1- 2020 380 694**

EP 4 040 390 B1

**Beschreibung**

Die vorliegende Erfindung betrifft ein Verfahren zur Orientierung eines Flurförderzeugs.

Flurförderzeuge werden regelmäßig in einer Lagerumgebung eingesetzt, um Waren, Lasten und andere Gegenstände aufzunehmen und abzusetzen. Die von dem Flurförderzeug zu transportierenden Gegenstände werden in der Regel auf Lastträgern transportiert und beispielsweise in Regalen und anderen Lagerplätzen gelagert. Für das Aufnehmen und Absetzen einer Last ist es wichtig, dass das Flurförderzeug die Last unter einer richtigen Orientierung aufnimmt. Orientierung gegenüber der Last oder einer Struktur im Lagerbereich bezeichnet beispielsweise einen Winkel der Fahrzeuglängsrichtung zu einer Kante oder Fläche der Struktur. Gemeinhin spricht man davon, dass ein Flurförderzeug ein Regal oder eine Last senkrecht anfährt, um die Last aufnehmen oder absetzen zu können.

Die erfindungsgemäße Aufgabe besteht darin, ein Verfahren zur Bestimmung einer Orientierung des Flurförderzeugs relativ zu einer Struktur bereitzustellen, das mit möglichst einfachen Mitteln zuverlässig die Orientierung des Flurförderzeugs ermitteln kann.

Hierzu stellt das Dokument US 2020/380694 A1 ein Verfahren zur Bestimmung des Gierwinkels eines Fahrzeugs relativ zu Regalen anhand von horizontalen Linien vor, wobei der Winkel aus dem perspektivischen Fluchtwinkel dieser Linie erkannt wird.

Erfindungsgemäß wird die Aufgabe durch ein Verfahren mit den Merkmalen nach Anspruch 1 gelöst. Vorteilhafte Ausgestaltungen bilden die Gegenstände der Unteransprüche.

Das erfindungsgemäße Verfahren ist vorgesehen und bestimmt, eine Orientierung des Flurförderzeugs relativ zu einer Struktur mit horizontalen Elementen zu ermitteln. Das Flurförderzeug ist bei dem Verfahren mit einer Kamera ausgestattet, die auf die Struktur mit den horizontalen Elementen gerichtet ist. Das erfindungsgemäße Verfahren besitzt eine Reihe von Schritten, die durchlaufen werden, wobei insbesondere bei den Schritten der Bildverarbeitung verschiedene Reihenfolgen der Schritte möglich sind. Bei dem erfindungsgemäßen Verfahren erfolgt das Aufzeichnen eines Bildes der Struktur mit mindestens einem horizontalen Element. Es ist dabei so, dass das Bild der Struktur ein zweidimensionales Bild ist, das auch das horizontale Element beinhaltet. Aufgrund der räumlichen Orientierung zwischen der Kamera und der Struktur verlaufen horizontale Linien im Raum nicht horizontal in dem aufgezeichneten Bild. In einem weiteren Schritt werden mindestens zwei geometrische Größen in dem aufgezeichneten Bild bestimmt. Bei geometrischen Größen kann es sich um Punkte, Linien, Winkel oder Felder handeln. Die geometrischen Größen sind dabei dem horizontalen Element zugeordnet bzw. Teil der Abbildung des horizontalen Elements. Erfindungsgemäß wird nun unter Verwendung der mindestens zwei geometrischen Größen ein Schnittwinkel zwischen einer Bildebene und einer vertikalen Ebene durch das horizontale Element bestimmt. Der grundlegende Gedanke hierbei ist, dass die beiden geometrischen Größen zu einem schräg im Bild verlaufenden Gegenstand gehören und somit eine Identifikation des Schnittwinkels zulassen, wobei der Schnittwinkel auch zwischen einer zur Bildebene parallelen Ebene und einer vertikalen Ebene durch das horizontale Element vorliegt.

In einer bevorzugten Ausgestaltung wird in dem aufgezeichneten Bild eine Kante identifiziert. Die Kantendetektion in Bildern ist ein an sich bekanntes Verfahren. Bei dem erfindungsgemäßen Verfahren werden bevorzugt Kanten identifiziert, die ihrer Lage nach von horizontalen Strukturen im Raum stammen können.

In einer bevorzugten Ausgestaltung sind die beiden geometrischen Größen Bildkoordinaten eines Bezugspunkts in dem Bild und ein Neigungswinkel der Kante in dem Bild. Aus der Bezugsgröße der Bildkoordinaten (X, Y) und einem Neigungswinkel der Kante im Bild kann beispielsweise durch eine Zuordnungsvorschrift ein Schnittwinkel bestimmt werden.

Für den Neigungswinkel der Kante wird dabei bevorzugt der Winkel der Kante im Bild bestimmt. Hierzu kann beispielsweise die Steigung der Kante im Bild bestimmt werden.

In einer alternativen Ausgestaltung, die selbstverständlich auch zusätzlich verwendet werden kann, bilden die zwei geometrischen Größen einen Abstand und einen Abstandswinkel zu einem Punkt des Gegenstands. Hier können als die beiden geometrischen Größen Polarkoordinaten angesetzt werden, die, ausgehend von der beobachtenden Kamera, einen Abstand und einen Winkel beschreiben. Auch hier kann mit Hilfe des Abstandes und des Winkels der Schnittwinkel der horizontalen Struktur mit der Bildebene bestimmt werden.

Eine weitere Möglichkeit für besonders günstige geometrische Größen besteht darin, entlang der identifizierten Kante mindestens zwei Punkte zu identifizieren. Bevorzugt liegen die Punkte auf der Kante weit auseinander, um möglichst eine genaue Winkelauflösung zu bekommen.

Bevorzugt wird, ausgehend von den zwei Punkten, jeweils ein Strahl bestimmt, dessen jeweiligen Punkte in einem 3D-Koordinatensystem auf den jeweiligen Bildpunkt abgebildet werden. Es handelt es sich hierbei um Strahlen von Punkten im dreidimensionalen Raum, die auf den Bildpunkt abgebildet werden. Bei diesen Strahlen kann für ein Punktpaar mit jeweils einem Punkt auf den Strahlen der Schnittwinkel bestimmt werden. Bevorzugt erfolgt hierbei die Berechnung des Schnittwinkels im dreidimensionalen Koordinatensystem.

Die vorstehend aufgezählten drei Möglichkeiten sind hierbei lediglich Beispiele für zwei aus dem Bild gewonnene geometrische Größen, die eine Bestimmung des Schnittwinkels zwischen der Bildebene und der Struktur mit dem horizontalen Element zulassen. Weitere Paare von geometrischen Größen sind ebenfalls möglich.

In einer bevorzugten Ausgestaltung wird die Kamera auf ein Lastregal mit einem oder mehreren horizontalen Lastregalträgern gerichtet. Das erfindungsgemäße Verfahren ist damit besonders für Flurförderzeuge geeignet, die sich in Raumbereichen bewegen, in denen eine Vielzahl von horizontalen Elementen vorliegt. Ein Lastregal mit seinen horizontalen Lastregalträgern ist im Zuge der Bildverarbeitung besonders einfach und zuverlässig erkennbar. Es ist keine aufwändige oder sonst wie ausgefeilte Bildverarbeitung notwendig, um vertikale oder überwiegend vertikale Kanten aus dem aufgezeichneten Bild zu entfernen und horizontale bzw. je nach Orientierung annähernd horizontale Linien zu bestimmen.

In einer bevorzugten Weiterbildung wird die Kamera an dem Flurförderzeug angebracht, so dass sie auch im Betrieb des Flurförderzeugs eine definierte Orientierung relativ zu dem Flurförderzeug und insbesondere relativ zu der Längsachse des Flurförderzeugs besitzt. Mit der Anbringung erhält die Kamera eine bevorzugt vorbestimmte Orientierung relativ zu dem Flurförderzeug. Bevorzugt ist die Kamera vertikal an dem Flurförderzeug angebracht, so dass die Bildebene der Kamera senkrecht zur Fahrzeuglängsachse steht. Auf diese Weise kann der Schnittwinkel zwischen der Verbindungslinie der Punkte aus dem Punktpaar und der Bildebene direkt in den Orientierungswinkel der Fahrzeuglängsachse zu dem horizontalen Element umgerechnet werden.

Als besonders vorteilhaft hat es sich herausgestellt, aus dem aufgezeichneten Bild vertikale Bildkanten herauszufiltern. Indem das Herausfiltern beispielsweise vorgenommen wird, bevor die Linie zu dem horizontalen Element ermittelt wird, vermeiden die fehlenden vertikalen Linien Fehler beim Ermitteln der Linien zu dem horizontalen Element. In einer bevorzugten Ausgestaltung wird für die mindestens eine auszuwertende Linie eine Linie außerhalb der Bildmitte gewählt. Linien außerhalb der Bildmitte werden unter einem besonderen perspektivischen Winkel von der Kamera betrachtet, der eine genauere Auswertung der Orientierung zulässt.

In einer bevorzugten Weiterbildung ist die Kamera als eine 2D-Kamera ausgebildet. Zudem ist die Kamera kalibriert, d. h. ihre Abbildungsverhältnisse sind bekannt. Aus dem Abbildungsverhältnis kann für Bildkoordinaten ein Richtungsvektor für den Strahl in dem 3D-Koordinatensystem berechnet werden. Bei dieser Umrechnung werden die beiden in der Ebene liegenden Bildpunkte in den Strahl umgerechnet, wobei alle Punkte im 3D-Koordinatensystem, die auf dem Strahl liegen, durch die Kamera auf den Bildpunkt abgebildet.

Es hat sich als besonders vorteilhaft herausgestellt, nicht nur mit einem Punktpaar zu arbeiten, sondern zur Bestimmung des Orientierungswinkels eine Vielzahl von Punktpaaren einzusetzen und die gewonnenen Ergebnisse wie unabhängige Messungen statistisch auszuwerten, beispielsweise mit dem Mittelwert.

Die Erfindung wird nachfolgend an einem Ausführungsbeispiel näher erläutert. Es zeigen:

Fig. 1     eine Draufsicht auf ein Flurförderzeug vor einem Lastregal,

Fig. 2     eine schräge Sicht auf das Lastregal,

Fig. 3     die Konstruktion von horizontalen Bildkanten, die waagerechten Elementen entsprechen,

Fig. 4     das Ergebnis einer ersten Filterung, bei der vertikale Linien unterdrückt sind,

Fig. 5     ein Abstellen auf die außermittigen horizontalen Bildlinien,

Fig. 6     die Bestimmung der Endpunkte L, R bei einer horizontalen Linie als Durchstoßpunkte einer horizontalen Ebene,

Fig. 7     die Umrechnung der Bildpunkte in einem Strahl mit 3D-Koordinaten,

Fig. 8     die Berechnung des Winkels zur Orientierung des Flurförderzeugs relativ zu der Bildebene,

Fig. 9     in einer schematischen Ansicht eine schräg im Bild verlaufende Kante, zu der ein Bildpunkt und ein Neigungswinkel $\alpha$ bestimmt wird und

Fig. 10    die Bestimmung der geometrischen Größen als Polarkoordinaten.

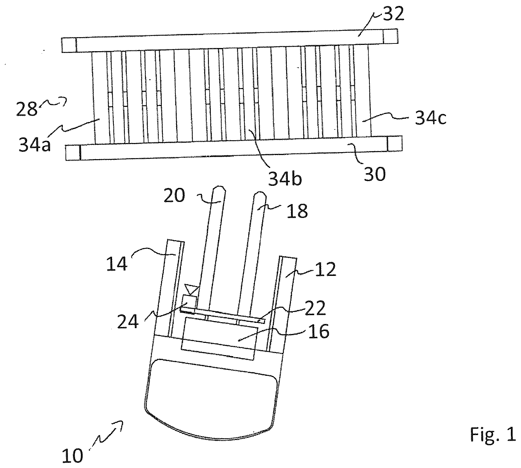

Figur 1 zeigt in einer Draufsicht ein Flurförderzeug 10, das in dem Beispiel als Schubmaststapler mit zwei Radarmen 12, 14 ausgebildet ist. Zwischen den Radarmen 12, 14 befindet sich ein schematisch dargestelltes Hubgerüst 16 mit zwei Gabelzinken 18, 20 als Lasttragmittel. An der Rückwand 22 der Gabelzinken 18, 20 ist eine 2D-Kamera 24 angebracht. Die 2D-Kamera 24 ist in Figur 1 schematisch dargestellt und kann für den Einsatz am Flurförderzeug sicher angebracht werden, so dass sie nicht von einer transportierten Last beschädigt oder verdeckt werden kann. Auch kann in dem Flurförderzeug berücksichtigt werden, dass die Kamera 24 mit dem Hubgerüst 16 ihre Position ändert. Die Positionsänderung besteht hierbei im Anheben oder Senken der Kamera 24 und in einem Vor- oder Zurückschieben des Hubgerüsts relativ zu den Radarmen.

Das Flurförderzeug steht mit seiner Längsachse relativ zu einem Lastregal 28, das in einer Draufsicht von oben dargestellt ist. Das Lastregal 28 besitzt ein Frontseite 30, die dem Flurförderzeug 10 zugewandt ist. Ebenso besitzt das Lastregal 28 eine Rückseite 32 auf der dem Flurförderzeug 10 abgewandten Seite. Zwischen Frontseite 30 und Rückseite 32 ist in Figur 1 ein Blick auf drei Lasthilfsmittel 34a-c dargestellt. Bei den Lasthilfsmitteln 34 handelt es sich jeweils um in das Lastregal eingelagerte Paletten, die zur besseren Übersicht leer dargestellt sind.

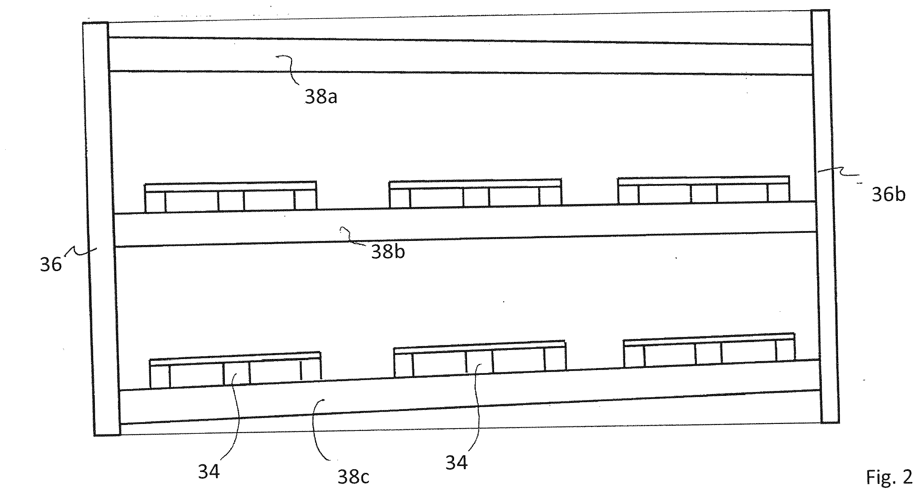

Figur 2 zeigt in einer schematischen Ansicht das Bild der 2D-Kamera 24. Zu erkennen ist die Frontseite 30 des Lastregals 28. Die Frontseite 30 des Regals wird von zwei vertikalen Regalstützen 36a, b gebildet. Zwischen den Regalstützen 36a, b angeordnet sind horizontal verlaufende Lastregalträger 38a, b, c. Der Begriff horizontal verlaufende Lastregalträger oder Elemente ist für Figur 2 erläuterungsbedürftig: Wie in Figur 2 ohne weiteres zu kennen, verläuft das Bild der Lastregalträger nicht horizontal. Die linke Seite von Figur 2 wirkt größer und näher als die rechte Seite des Regals. Es liegt also eine perspektivische Verjüngung in dem Bild vor. Gleichwohl ist trotz der perspektivischen Verjüngung im Bild der Lastregalträger 38 horizontal. In den Lastregalträgern sind Lasthilfsmittel 34 eingezeichnet. Das Bild in Figur 2 ist ein sogenanntes Gradientenbild, bei dem räumlich in die Tiefe gehende Bereiche des Bildes herausgefiltert sind und nur die vordere Seite im Bild dargestellt ist. Ein solches Abstellen auf die vorderen, der Kamera zugewandten Kanten reduziert den Informationsgehalt des Bildes, weil Tiefeninformationen verlorengehen.

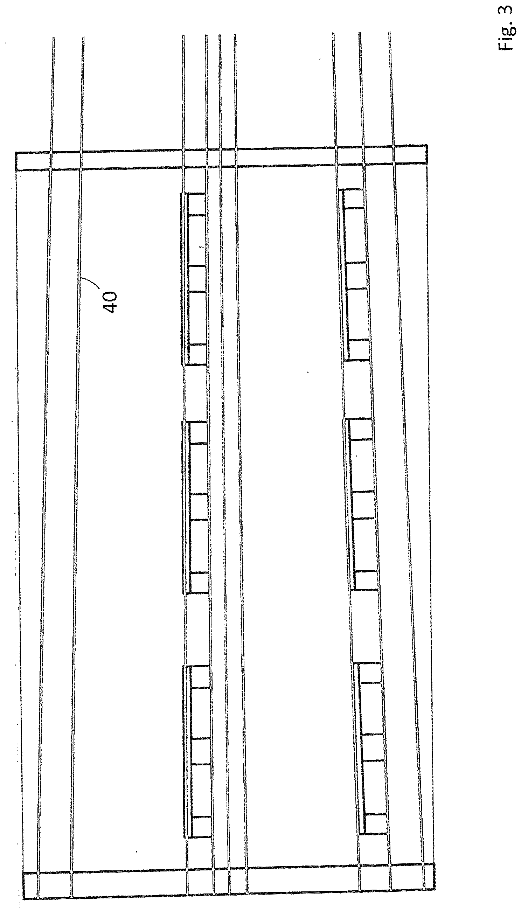

Figur 3 zeigt einen weiteren Schritt der Bildverarbeitung, in dem horizontale Linien 40 in das Bild eingezeichnet werden. Diese werden aus den vorhandenen Bilddaten ermittelt, beispielsweise durch Kantenextraktion. In Figur 3 ist zu erkennen, dass die gebildeten Linien 40 nicht parallel zueinander verlaufen, sondern die perspektivische Verjüngung, die sich aus der Orientierung des Flurförderzeugs gegenüber dem Regal ergibt, widerspiegeln.

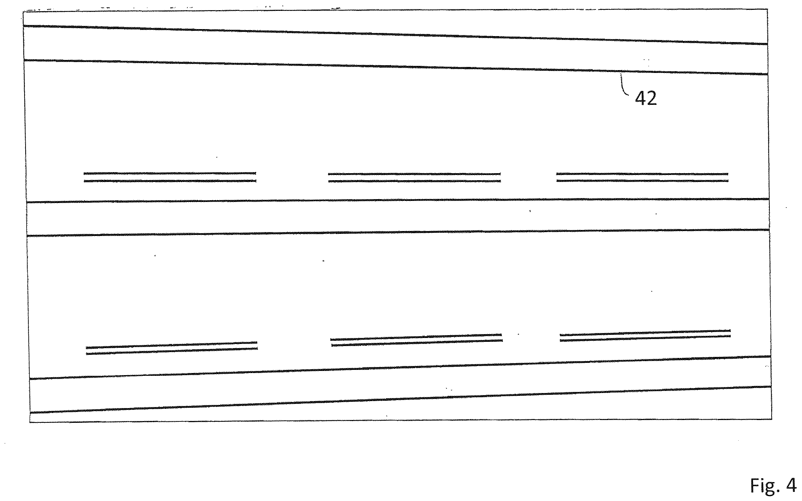

Figur 4 zeigt einen weiteren Schritt, bei dem eine erste Filterung hin zu den informationstragenden Kanten erfolgt. Vertikale Linien werden hierbei herausgefiltert. Ebenso werden die konstruierten horizontalen Linien 40 wieder auf die Kanten aus dem Bild reduziert.

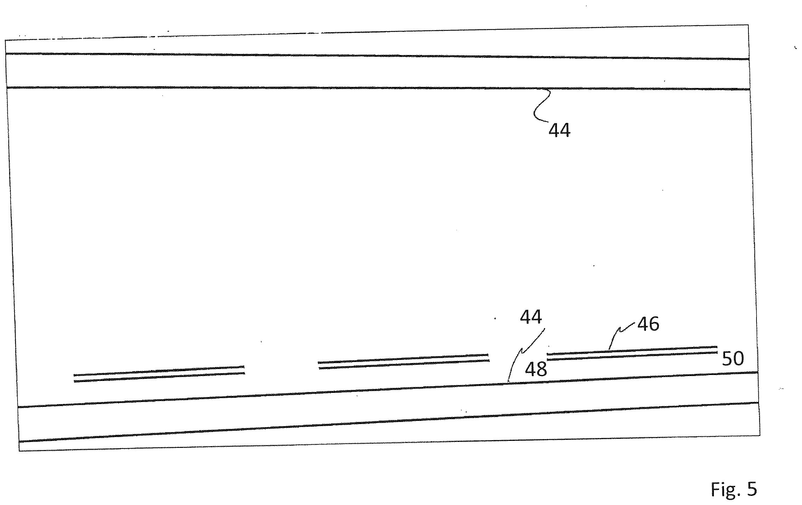

Figur 5 zeigt den Schritt, dass die horizontalen Linien im Bild, die ungefähr durch die Bildmitte oder einen Bereich um die Bildmitte verlaufen, herausgenommen werden. Übrig bleiben die informationstragenden Bildkanten 44, die am deutlichsten, die perspektivische Verjüngung zeigen.

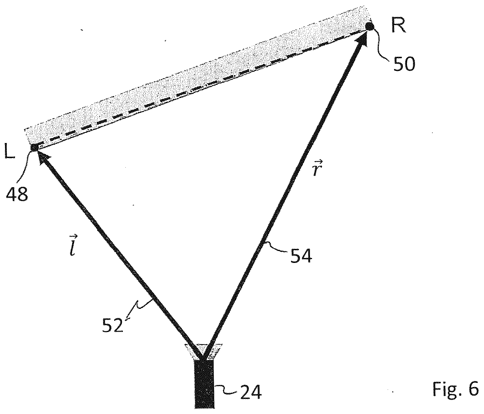

Aus diesen informationstragenden Bildkanten wird eine Bildkante, beispielsweise die Bildkante 46 einer gelagerten Palette herausgegriffen. Für diese Bildkante 46 werden Punkte hier beispielsweise die Endpunkte L 48 und R 50 bestimmt. Das Herausfinden der Endpunkte ist ein in der Bildverarbeitung geläufiger Vorgang. Zu den Endpunkten L und R zeigt Figur 6 die geometrischen Verhältnisse. Ausgehend von der Kamera 24 führt zu dem Endpunkt L 48 ein Vektor $\vec{l}$. Der Vektor $\vec{l}$ beschreibt einen Strahl 52 ebenso wie der Strahl 54.

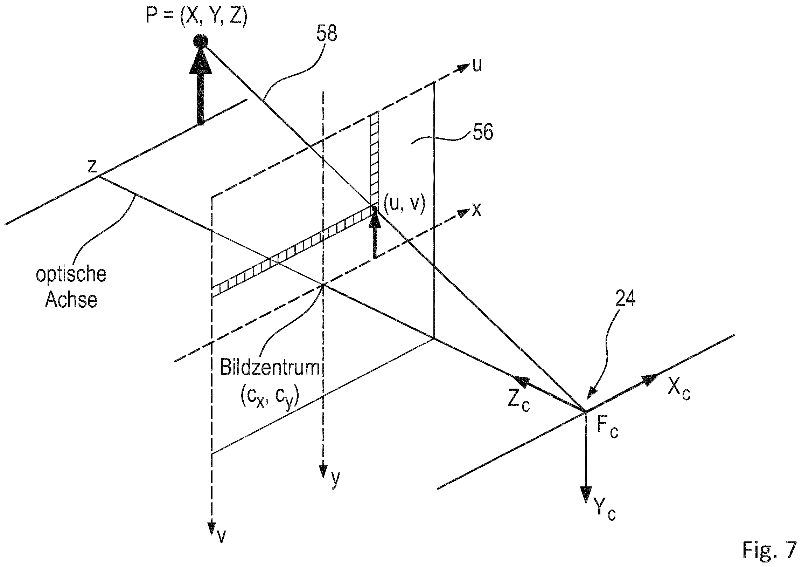

Figur 7 hilft das Konzept der Strahlen zu verstehen. Figur 7 zeigt den Ursprung $F_c$ der idealisierten Kamera 24. Hieran hängt ein rechtshändig orientiertes Dreibein $X_c$, $Y_c$ und $Z_c$. Die Z-Achse sei die optische Achse der Kamera und möge der Einfachheit halber als parallel zur Fahrzeuglängsrichtung gedacht werden. Die Kamera 24 erzeugt eine Bildebene 56. Die Punkte in der Bildebene 56 können als u-, v-Koordinaten, als zweidimensionale Bildkoordinaten beschrieben werden. In Figur 7 ist beispielhaft ein Bildpixel im ersten Quadranten des Bildes eingezeichnet. Da die Abbildungsverhältnisse der Kamera 24 bekannt sind, kann zu dem Bildpunkt (u, v) ein Strahl 58 konstruiert werden. Jeder Punkt P auf dem Strahl 58 wird auf dem Bild der Kamera in dem Pixel (u, v) abgebildet. Dieses System beschreibt also, wie aus den Pixelwerten für eine Kamera, deren Abbildungsverhältnisse bekannt sind, ein Strahl 58 konstruiert werden kann. Figur 7 zeigt auch anschaulich, dass die Entfernung des Punktes P von der Kamera 24 nicht aus dem Bildpunkt (u,v) ermittelt werden kann. Dies ist auch nicht verwunderlich, da die dreidimensionalen Koordinaten mithilfe der Kamera auf das zweidimensionale Bild abgebildet werden. Für die Kamera 24 muss zur Rekonstruktion des Strahls mit den möglichen Bildpunkten P die Brennweite der Kamera, insbesondere der drei Achsen $X_c$, $Y_c$ und $Z_c$ bekannt sein.

Betrachten wir noch einmal Figur 6. Hier gibt es zwei Richtungsvektoren L-Vektor $\vec{l}$, R-Vektor $\vec{r}$, die von Bildpunkten stammen, die nicht horizontal im Bild angeordnet sind, also nicht die gleichen v-Werte, also Zeilenwerte im Bild besitzen. Zu den beiden so entstandenen Strahlen mit L-Vektor $\vec{l}$ und R-Vektor $\vec{r}$ ist nicht bekannt, in welchem Abstand relativ zueinander die Endpunkte liegen. Grundsätzlich bewegen sich die Strahlen durch den dreidimensionalen Raum und jede Linie zwischen den beiden Strahlen könnte dem aufgenommenen Element mit den Endpunkten L, R im dreidimensionalen Raum entsprechen. Da aber von diesem Element bekannt ist, dass es horizontal angeordnet ist, können Werte mit gleicher Höhe in dem 3D-Koordinatensystem ausgewählt werden. Es werden also aus dem L-Strahl ein Punkt mit einem bestimmten Wert für die Y-Koordinate ausgewählt, ebenso wie aus dem R-Strahl. Die Verbindung dieser beiden Punkte ist in Figur 6 dargestellt. Sie besitzt den in Figur 6 dargestellten Verlauf.

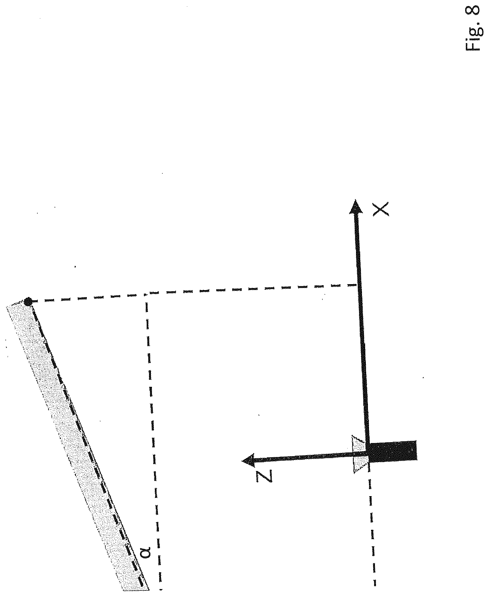

Den letzten Schritt verdeutlicht Figur 8. Hier ist das Kameradreibein in der Durchstoßebene mit seinen X-, Z-Koordinaten dargestellt. Nun ist bekannt, dass die beiden Punkte, die auf den Strahlen L, R liegen, die gleiche Y-Koordinate besitzen. Hieraus werden dann die gleichen Koordinaten errechnet. Es sei:

$$L(n) = n \cdot \begin{pmatrix} l_x \\ l_y \\ l_z \end{pmatrix}$$

$$R(n_2) = n_2 \cdot \begin{pmatrix} r_x \\ r_y \\ r_z \end{pmatrix}.$$

Unter der Annahme, dass die Y-Koordinaten der beiden Strahlen L und R gleich sind ergibt sich:

$$n \cdot l_y = n_2 \cdot r_y.$$

Aus diesen beiden Gleichungen ergibt sich durch einfaches Umformen, dass das dargestellte Dreieck in Figur 8 für den Winkel $\alpha$ eine Ankathete der Länge a besitzt:

$$a = n \cdot \left( r_x \cdot \frac{l_y}{r_y} - l_x \right).$$

Die Größe der Gegenkathete b kann ebenfalls direkt abgelesen werden und ergibt sich zu:

$$b = n \cdot \left( r_z \cdot \frac{l_y}{r_y} - l_z \right).$$

Das Besondere an dem erfindungsgemäßen Ansatz ist nur, dass sich für die Berechnung des Winkels $\alpha$ die Unbekannte n heraus kürzt. Betrachten wir den Tangens des Orientierungswinkels so ergibt sich:

$$\tan(\alpha) = \frac{b}{a} = \frac{n \cdot \left( r_z \cdot \frac{l_y}{r_y} - l_z \right)}{n \cdot \left( r_x \cdot \frac{l_y}{r_y} - l_x \right)}$$

$$\tan(\alpha) = \frac{\left( r_z \cdot \frac{l_y}{r_y} - l_z \right)}{\left( r_x \cdot \frac{l_y}{r_y} - l_x \right)}.$$

Die in der Gleichung enthaltenen Größen sind die Koordinaten aus den Strahlen, die zu den Punkten führen. Diese Koordinaten sind abhängig von der Brennweite $f_x f_y$ der Kamera 24 in Richtung der X- und der Y-Richtung. Die Berechnung dieser Koordinaten aus den Bildkoordinaten ist hinlänglich bekannt, und ergibt sich aus der folgenden Gleichung:

$$x' = x/z$$

$$y' = y/z$$

$$u = f_x \cdot x' + c_x$$

$$v = f_y \cdot y' + c_y.$$

Die Größen x' und y' sind Hilfsgrößen, die zusammen mit den Brennweiten $f_x$, $f_y$ und dem Bildzentrum $c_x$, $y_x$ die Abbildung in den Bildkoordinaten UV beschreibt. Durch eine einfache Umformung ergibt sich folgender Zusammenhang:

$$x' = (u - c_x) / f_x$$

$$y' = (v - c_y) / f_y.$$

Zusammen mit den aus der Kamerakalibrierung bekannten Größen $c_x$, $c_y$, $f_x$, $f_y$ ergibt sich für die dreidimensionalen Koordinaten (X, Y, Z) der Strahl in den dreidimensionalen Koordinaten mit einer Richtung (X', Y', 1). Zu beachten ist, dass dieser Richtungsvektor des Strahls nicht normiert ist, was aber auch für die weitere Berechnung nicht erforderlich ist.

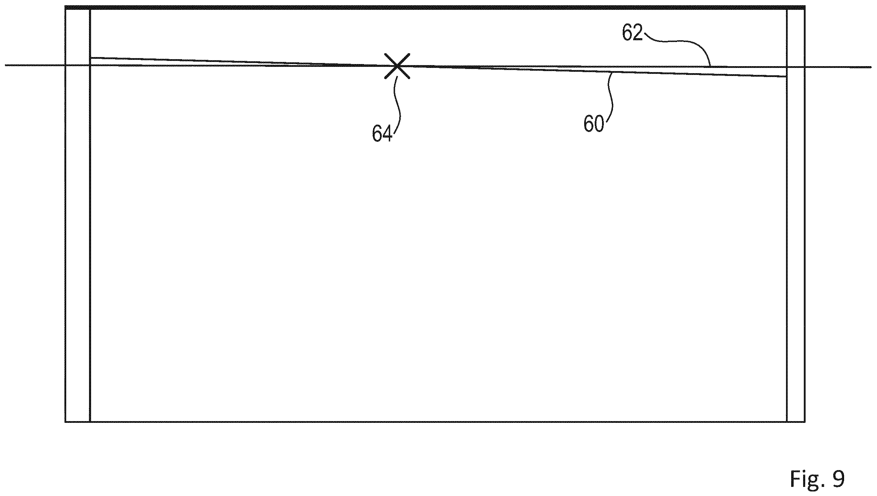

Das Beispiel in Fig. 9 zeigt ein Bild mit einer eingezeichneten Kante 60. Die Kante 60 ist gegenüber der Horizontalen 62 geneigt. In dem Bild wird zudem ein Punkt 64 auf der Kante 60 bestimmt. Für die Bestimmung des Punktes 64 können verschiedenste Ansätze gewählt werden. Beispielsweise kann die Mitte der Kante 60 gewählt werden. Es kann aber auch ein Punkt 64 gewählt werden, bei dem die eingeschlossene Bildfläche zwischen der Kante 60 und der Horizontalen 62 auf beiden Seiten des Punktes 64 gleich groß ist. Aus der Auswertung der Kante 60 ergeben sich mit dem Punkt und dem Winkel zwei geometrische Größen, die insgesamt als (X, Y, $\alpha$) bezeichnet werden können. Für die Auswertung ist es nun möglich, beispielsweise in einer Look-Up-Tabelle zu den Werten X, Y, $\alpha$ einen Schnittwinkel nachzusehen. Die Look-Up-Tabelle kann bereits im Vorfeld berechnet werden und ist damit für eine schnelle Auswertung zugänglich. Insbesondere unter dem Aspekt, dass viele Kanten in dem Bild ausgewertet werden sollen, kann sich eine Look-Up-Tabelle als hilfreich erweisen.

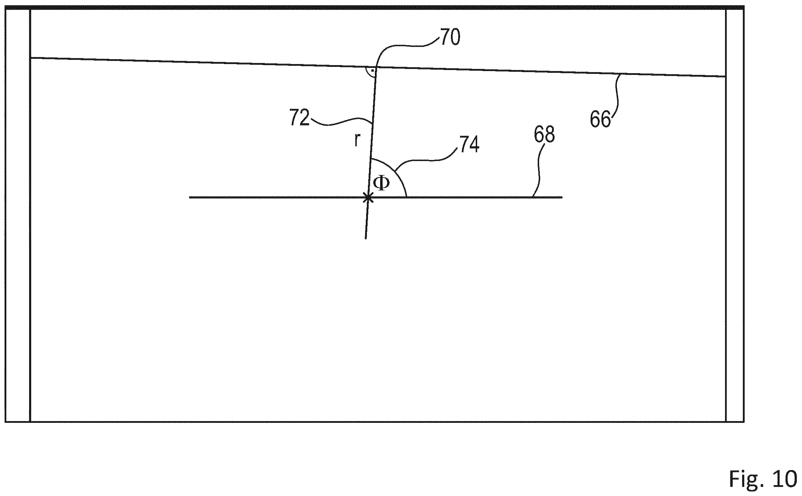

Fig. 10 zeigt eine sehr ähnliche Situation wie in Fig. 9, bei der eine Kante 66 schräg im Bild verläuft. Zur Bestimmung der beiden geometrischen Größen wird, ausgehend von einem Punkt 70, auf der Kante 66 wird ein Abstand r, 72 und ein Winkel $\varphi$, 74 bestimmt. Der Winkel 74 ist hierbei gegenüber einer Horizontalen 68 festgelegt. Der Abstand 72 steht in diesem Beispiel senkrecht auf der Kante 66. Grundsätzlich könnte der Abstand auch senkrecht auf der Horizontalen 68 stehen und unter einem Neigungswinkel die Kante 66 schneiden.

Auch bei diesem Ansatz wird beispielsweise über eine Look-Up-Tabelle für die geometrischen Größen r, $\varphi$ ein Schnittwinkel nachgesehen und verwendet. Sollten für mehrere Punkte 70 oder mehrere Kanten 66 unterschiedliche Schnittwinkel entstehen, so können diese statistisch ausgewertet werden.

Bezugszeichenliste

| | |
|---|---|
| 10 | Flurförderzeug |
| 12 | Radarm |
| 14 | Radarm |
| 16 | Hubgerüst |
| 18 | Gabelzinken |
| 20 | Gabelzinken |
| 22 | Rückwand |
| 24 | 2D-Kamera |
| 28 | Lastregal |
| 30 | Frontseite des Lastregals |
| 32 | Rückseite des Lastregals |
| 34a-c | Lasthilfsmittel |
| 36a-b | Regalstützen |
| 38a-c | Lastregalträger |
| 40 | horizontale Linien |
| 44 | Bildkante |
| 46 | Bildkante |
| 48 | Endpunkt L |
| 50 | Endpunkt R |
| 52 | Strahl |
| 56 | Bildebene |
| 58 | Strahl |
| 60 | Kante |
| 62 | Horizontale |
| 64 | Punkt |
| 66 | Kante |
| 68 | Horizontale |
| 70 | Punkt |
| 72 | Abstand r |
| 74 | Winkel φ |

**Patentansprüche**

1. Verfahren zur Bestimmung einer Orientierung eines Flurförderzeugs (10) relativ zu einer Struktur mit mindestens einem horizontalen Element, wobei das Flurförderzeug (10) eine 2D-Kamera (24) aufweist, die auf die Struktur gerichtet ist, wobei das Verfahren die folgenden Verfahrensschritte aufweist:

   ◦ Aufzeichnen eines Bildes der Struktur mit dem mindestens einem horizontalen Element, wobei in dem aufgezeichneten Bild eine Kante identifiziert wird,
   ◦ in dem aufgezeichneten Bild werden entlang der identifizierten Kante mindestens zwei Punkte (L, R) (48, 50) identifiziert, die dem horizontalen Element entsprechen,
   ◦ Bestimmen jeweils eines Strahls ($\vec{l}, \vec{r}$) (52, 58) zu einem der beiden Punkte (L, R), dessen jeweilige Punkte in einem 3D-Koordinatensystem auf den jeweiligen Punkt (L, R) im Bild abgebildet werden, und
   ◦ Bestimmen eines Schnittwinkels zwischen einer Bildebene (56) und einer vertikalen Ebene durch das horizontale Element aus einem Punktpaar mit jeweils einem Punkt auf den Strahlen, die auf gleicher Höhe in dem 3D-Koordinatensystem liegen.

2. Verfahren nach Anspruch 1, **dadurch gekennzeichnet, dass** von mindestens einem Punktpaar mit jeweils einem Punkt in einem der beiden Strahlen (52, 58) in dem 3D-Koordinatensystem der Schnittwinkel bestimmt wird.

3. Verfahren nach einem der vorherigen Ansprüche, **dadurch gekennzeichnet, dass** die Kamera (24) auf ein Lastregal (28) mit horizontalen Lastregalträgern (38a-c) gerichtet wird.

4. Verfahren nach einem der vorherigen Ansprüche, **dadurch gekennzeichnet, dass** die Kamera (24) an dem Flurförderzeug (10) angebracht ist.

5. Verfahren nach einem der vorherigen Ansprüche, **dadurch gekennzeichnet, dass** die Bildebene der Kamera (24) eine vorbestimmte Orientierung, insbesondere eine vertikale Orientierung an dem Flurförderzeug (10) aufweist.

6. Verfahren nach einem der vorherigen Ansprüche, **dadurch gekennzeichnet, dass** in dem aufgezeichneten Bild vertikale Kanten herausgefiltert werden.

7. Verfahren nach einem der vorherigen Ansprüche, **dadurch gekennzeichnet, dass** Linien in einem Bereich der Bildmitte herausgefiltert werden.

8. Verfahren nach einem der vorherigen Ansprüche, **dadurch gekennzeichnet, dass** die Kamera (24) kalibriert ist und ein Punkt mit den Bildkoordinaten (u, v) in einen Richtungsvektor (x', y', 1) für einen Strahl umgerechnet wird, dessen Punkte in dem 3D-Koordinatensystem jeweils auf den Punkt mit den Bildkoordinaten abgebildet werden.

9. Verfahren nach einem der vorherigen Ansprüche, **dadurch gekennzeichnet, dass** eine Vielzahl der jeweils mindestens zwei Punkte ausgewertet wird, wobei die sich ergebende Vielzahl von Schnittwinkeln statistisch ausgewertet wird.

**Claims**

1. A method for determining an orientation of an industrial truck (10) relative to a structure comprising at least one horizontal element, wherein the industrial truck (10) comprises a 2D-camera (24) that is directed at the structure, wherein the method comprises the following method steps:

   ◦ recording an image of the structure comprising the at least one horizontal element, wherein an edge is identified in the recorded image,
◦ at least two points (L, R) (48, 50) which correspond to the horizontal element are identified along the identified edge in the recorded image,
◦ determining one ray ( $\vec{l}, \vec{r}$ ) (52, 58) to each of the two points (L, R), the respective points of which ray in a 3D coordinate system are mapped onto the respective point (L, R) in the image,
◦ determining an angle of intersection between an image plane (56) and a vertical plane through the horizontal element from a pair of points with one point on each of the rays, wherein the points are at the same height in the 3D coordinate system.

2. The method according to claim 1, **characterized in that** the angle of intersection is determined in the 3D coordinate system from at least one pair of points with one point in each of the rays (52, 58).

3. The method according to any one of the preceding claims, **characterized in that** the camera (24) is directed at a load rack (28) comprising horizontal load rack beams (38a-c).

4. The method according to any one of the preceding claims, **characterized in that** the camera (24) is mounted on the industrial truck (10).

5. The method according to any one of the preceding claims, **characterized in that** the image plane of the camera (24) has a predefined orientation, in particular a vertical orientation on the industrial truck (10).

6. The method according to any one of the preceding claims, **characterized in that** vertical edges in the recorded image are filtered out.

7. The method according to any one of the preceding claims, **characterized in that** lines in a region of the center of the image are filtered out.

8. The method according to any one of the preceding claims, **characterized in that** the camera (24) is calibrated and a point having the image coordinates (u, v) is converted into a direction vector (x', y', 1) for a ray, the points of which ray in the 3D coordinate system are mapped onto the respective point having the image coordinates.

9. The method according to any one of the preceding claims, **characterized in that** a large number of the in each case at least two points is evaluated, wherein the resulting large number of angles of intersection is statistically evaluated.

**Revendications**

1. Procédé de détermination d'une orientation d'un chariot de manutention (10) par rapport à une structure dotée d'au moins un élément horizontal, dans lequel le chariot de manutention (10) présente une caméra 2D (24), laquelle est dirigée vers la structure, dans lequel le procédé comprend les étapes de procédé suivantes :

◦ enregistrement d'une image de la structure dotée de l'au moins un élément horizontal, dans lequel une arête est identifiée dans l'image enregistrée,
◦ au moins deux points (L, R) (48, 50) correspondant à l'élément horizontal sont identifiés le long de l'arête identifiée dans l'image enregistrée,
◦ détermination respectivement d'un faisceau ($\vec{l}$, $\vec{r}$) (52, 58) vers l'un des deux points (L, R), dont les points respectifs sont représentés dans un système de coordonnées 3D sur le point (L, R) respectif dans l'image, et
◦ détermination d'un angle de coupe entre un plan d'image (56) et un plan vertical à travers l'élément horizontal à partir d'une paire de points avec respectivement un point sur les faisceaux situés à une même hauteur dans le système de coordonnées 3D.

2. Procédé selon la revendication 1, **caractérisé en ce que** l'angle de coupe d'au moins une paire de points comportant respectivement un point dans l'un des deux faisceaux (52, 58) dans le système de coordonnées 3D est déterminé.

3. Procédé selon l'une des revendications précédentes, **caractérisé en ce que** la caméra (24) est dirigée vers une étagère de charge (28) avec des supports d'étagère de charge horizontaux (38a-c).

4. Procédé selon l'une des revendications précédentes, **caractérisé en ce que** la caméra (24) est fixée au chariot de manutention (10).

5. Procédé selon l'une des revendications précédentes, **caractérisé en ce que** le plan d'image de la caméra (24) présente une orientation prédéterminée, en particulier une orientation verticale sur le chariot de manutention (10).

6. Procédé selon l'une des revendications précédentes, **caractérisé en ce que** des arêtes verticales sont exclues de l'image enregistrée.

7. Procédé selon l'une des revendications précédentes, **caractérisé en ce que** des lignes dans une région du centre d'image sont exclues.

8. Procédé selon l'une des revendications précédentes, **caractérisé en ce que** la caméra (24) est étalonnée et un point avec les coordonnées d'image (u, v) est converti en un vecteur directionnel (x', y', 1) pour un faisceau, dont les points dans le système de coordonnées 3D sont représentés respectivement sur le point avec les coordonnées d'image.

9. Procédé selon l'une des revendications précédentes, **caractérisé en ce qu'**une pluralité des au moins deux points respectifs sont évalués, dans lequel la pluralité d'angles de coupe obtenus sont évalués statistiquement.

Fig. 1

Fig. 2

Fig. 3

EP 4 040 390 B1

42

Fig. 4

Fig. 5

Fig. 6

Fig. 7

Fig. 8

Fig. 9

EP 4 040 390 B1

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020380694 A1